# EUROPÄISCHE PATENTANMELDUNG

(11) **EP 2 907 405 A1**
(43) Veröffentlichungstag der Anmeldung: **19.08.2015**
(21) Anmeldenummer: 14155451.9
(22) Anmeldetag: 17.02.2014
(51) Int. Cl.: A43B 7/14, A61H 7/00, B29D 35/02

(54) **Überzug für eine Extremität des menschlichen Körpers**

(71) Anmelder: Grossenbacher, Jürg, 3073 Gümligen (CH)
(72) Erfinder: Grossenbacher, Jürg, 3073 Gümligen (CH)
(74) Vertreter: BOVARD AG

(57) **Zusammenfassung**

Ein Überzug (1) für eine Extremität des menschlichen Körpers, insbesondere Fussüberzug, umfasst eine Hülle (2), die aus einem dehnbaren Material gebildet ist und den entsprechenden Körperteil anliegend umspannt. An der inneren Oberfläche (3) der Hülle (2) sind noppenartige Vorsprünge (4) zur Stimulierung von Reflexzonen angebracht. Die Hülle (2) besteht aus einem gummiartigen elastischen Material, in welchen die noppenartigen Vorsprünge (4) eingeformt sind. Die noppenartigen Vorsprünge (4) decken in über den Körperteil gezogenen Zustand die Reflexzonen ab, die noppenartigen Vorsprünge (4) weisen in unterschiedlichen Reflexzonen unterschiedliche Grössen auf. Dadurch wird eine optimale Stimulierung der Reflexzonen erreicht.

## Beschreibung

Die vorliegende Erfindung bezieht sich auf einen Überzug für eine Extremität des menschlichen Körpers, insbesondere Fussüberzug, umfassend eine Hülle, die aus einem dehnbaren Material gebildet ist und den entsprechenden Körperteil, über welchen der Überzug überziehbar ist, anliegend umspannt, bei welcher Hülle an der inneren Oberfläche noppenartige Vorsprünge zur Stimulierung der entsprechenden Reflexzonen angebracht sind.

Die Stimulationen beziehungsweise Massagen von Reflexzonen des menschlichen Körpers insbesonders an den Füssen sind seit langer Zeit bekannt, durch derartige Behandlungen werden die Organe besser durchblutet, somit können Schmerzen gelindert oder eliminiert, Krankheiten geheilt oder vorgebeugt und die Funktion von Organen angeregt werden. Insbesondere bekannt ist die Fussreflexzonenmassage. Die Reflexzonen am Fuss befinden sich nicht nur an der Fusssohle, vielmehr verteilen sie sich auch über den Fussrücken und die Innen- und Aussenseite des Fusses. Die Reflexzonen beziehungsweise Reflexpunkte des Fusses und mit welchen Organen diese zusammenhängend sind, sind beispielsweise im Buch mit dem Titel ,Gesund in die Zukunft' von Hedi Masafret, erschienen im TREMA-Verlag, Zürich (1980), im Detail dargestellt und beschrieben.

Zur Stimulation von Fussreflexzonen sind Schuhsohlen hergestellt worden, die eine Noppenstruktur aufweisen, die gegen die Fussunterseite gerichtet ist, welche als Sohlen in Schuhe eingelegt werden können und die an der Unterseite sich befindenden Fussreflexzonen beim Gehen stimuliert werden. Durch diese Sohlen werden nur die an der Fusssohle sich befindenden Reflexzonen stimuliert, die an den oben beschriebenen, am Fuss noch weiter vorzufindenden Reflexzonen werden nicht berücksichtigt.

Es sind auch Strumpfwaren oder Socken bekannt, welche innenseitig mit einer einheitlichen Noppenstruktur ausgestattet sind, über welche Noppenstrukturen beim Gehen die Fussreflexzonen stimuliert werden sollen. Damit auch die Fussreflexzonen entsprechend berücksichtigt werden, die sich nicht im Sohlenbereich des Fusses befinden, müssen Schuhe getragen werden, wobei die Wirksamkeit bei gewissen Reflexzonen, die sich beispielweise an der Innenseite oder dem Knöchelbereich des Fusses befinden, sehr eingeschränkt ist.

Eine Aufgabe der vorliegenden Erfindung besteht somit darin, einen Überzug für eine Extremität des menschlichen Körpers, insbesondere Fussüberzug, zu schaffen, mit welchem eine möglichst optimale Stimulierung aller Reflexzonen erwirkt werden kann, die durch den Überzug bedeckt sind und der auch eine Wirkung ausübt, wenn der entsprechende Körperteil nicht belastet ist (sedierend).

Erfindungsgemäss erfolgt die Lösung dieser Aufgabe dadurch, dass die Hülle aus einem gummiartigen elastischen Material gebildet ist, in welchem die noppenartigen Vorsprünge eingeformt sind, und dass die noppenartigen Vorsprünge im über den Körperteil gezogenen Zustand sämtliche Reflexzonen abdecken und die noppenartigen Vorsprünge in unterschiedlichen Reflexzonen unterschiedliche Grössen aufweisen.

Der Überzug wird als relativ genaues Abbild des Körperteils, über welchen dieser Überzug gezogen wird, hergestellt. Indem dieser Überzug aus einem gummiartigen elastischen Material gebildet ist, wird erreicht, dass der Körperteil, insbesondere der Fuss, entsprechend vollumfänglich umschlossen ist, und dass auf die gesamte Oberfläche des Körperteils ein gewisser Flächendruck ausgeübt wird. Auf der inneren Oberfläche der Hülle dieses Überzugs sind die noppenartigen Vorsprünge angebracht, die ebenfalls aus diesem gummiartigen elastischen Material bestehen. Hierbei sind diese noppenartigen Vorsprünge jeweils im Bereich der zu stimulieren Reflexzonen angeordnet. Diese noppenartigen Vorsprünge können in unterschiedlichen Reflexzonen unterschiedliche Grössen aufweisen. Kleine noppenartige Vorsprünge werden bei denjenigen Reflexzonen angeordnet, die eher sekondäre Priorität haben oder oberflächlich im entsprechenden Körperteil eingebettet sind. Grössere noppenartige Vorsprünge werden bei Reflexzonen angeordnet, die beispielsweise tiefer im Gewebe des entsprechenden Körperteils liegen oder bei primärer Priorität der Zonen. Durch diese Ausgestaltung wird erreicht, dass eine optimale Stimulierung aller Reflexzonen des Körperteils erreicht wird, die durch den Überzug abgedeckt sind. Die noppenartigen Vorsprünge werden im Körperteil, der durch den Überzug abgedeckt ist, durch den elastischen Zug des gummiartigen elastischen Materials dauernd leicht gegen die Reflexzonen gedrückt (sedierend), eine Stimulierung dieser Reflexzonen finden somit über den gesamten Zeitraum statt, in welchen dieser Überzug getragen wird. Füsse mit übergezogenen Überzügen können auch in Schuhen getragen werden, wodurch beim Gehen die Stimulation der Reflexzonen, auch diejenigen welche sich auf dem Fussrücken befinden, noch verstärkt wird.

Die Hülle kann an allen Reflexzonen des Körperteils, mit welchem die Hülle in Kontakt kommt, mit entsprechenden noppenartigen Vorsprüngen versehen sein, wodurch eine vollständige Reflexzonenstimulation des Körperteils erreicht wird, die Hülle kann aber auch nur an ausgewählten Reflexzonen des Körperteils, mit welchen die Hülle in Kontakt kommt, mit noppenartigen Vorsprüngen versehen sein, wodurch eine spezifische Stimulation der Reflexzonen des entsprechenden Körperteils möglich wird.

In vorteilhafter Weise ist die Grösse der noppenartigen Vorsprünge für einen Überzug mittlerer Grösse festgelegt, und ist die Grösse der noppenartigen Vorsprünge etwa proportional an die Grösse von kleineren Überzügen beziehungsweise grösseren Überzügen angepasst. Dies bedeutet, dass bei allen Überzügen (X) die gleiche Anzahl von noppenartigen Vorsprüngen angebracht ist, dass diese noppenartigen Vorsprünge bei grösseren Überzügen grösser sind und bei kleineren Überzügen kleiner sind, wodurch die optimale Wirkungsweise für alle Grössen von Überzügen gewährleistet ist.

Eine optimale Wirkung der Stimulation der Reflexzonen wird dann erreicht, wenn die noppenartigen Vorsprünge im Wesentlichen jeweils einen Durchmesser und eine Höhe aufweisen, die etwa 2 mm bis 6 mm betragen.

Eine weitere vorteilhafte Ausgestaltung der Erfindung besteht darin, dass das gummiartige elastische Material Latex oder Silikon ist. Diese Materialien sind insbesondere hautfreundlich und in einfacher Weise einsetzbar.

Eine weitere Aufgabe der Erfindung besteht darin, ein Verfahren zu schaffen, mit welchem die Überzüge für einen Körperteil eines menschlichen Körpers, insbesondere Fussüberzug in einfacherweise hergestellt werden können.

Erfindungsgemäss erfolgt die Lösung dieser Aufgabe dadurch, dass eine den Körperteilen entsprechende Form hergestellt wird, in welcher noppenartige Vertiefungen angebracht werden, dass auf die Form das im Wesentlichen in flüssigem Zustand vorliegende gummiartige Material aufgebracht wird und nach dem Trocknen des gummiartigen Materials der so gebildete Überzug von der Form abgezogen wird.

Die Form kann in bekannter Weise den entsprechenden Körperteil genau abbilden, das auf die Form aufgebrachte gummiartige Material, das nach dem Trocknen von der Form abgezogen wird, passt somit genau auf den entsprechenden Körperteil.

Das in flüssigem Zustand vorliegende gummiartige Material kann durch einen Auftragvorgang auf die Form aufgebracht werden, beispielsweise durch Aufspritzen oder Aufsprühen, das Aufbringen des in flüssigem Zustand vorliegenden gummiartigen Materials auf die Form kann aber auch durch mindestens einmaliges Eintauchen der Form in ein Bad mit dem in flüssigem Zustand vorliegenden gummiartigen Material erreicht werden.

Der Überzug kann auch dadurch hergestellt werden, indem dieser durch einen dreidimensionalen Druckvorgang mit einem gummiartigen Material gebildet wird.

Eine Ausführungsform des Überzugs sowie ein Verfahren zu dessen Herstellung werden nachfolgend an Hand der beiliegenden Zeichnung beispielhaft näher erläutert.

Es zeigt
Figur 1 einen erfindungsgemässen Fussüberzug im Schnitt mit darin angebrachten noppenartigen Vorsprüngen;
Figur 2 eine Ansicht der Anordnung der noppenartigen Vorsprünge im erfindungsgemässen Fussüberzug auf der Aussenseite des Fusses;
Figur 3 eine Ansicht der Anordnung der noppenartigen Vorsprünge im erfindungsgemässen Fussüberzug auf der Innenseite des Fusses;
Figur 4a eine Ansicht der Anordnung der noppenartigen Vorsprünge im erfindungsgemässen Fussüberzug auf der Unterseite des rechten Fusses;
Figur 4b eine Ansicht der Anordnung der noppenartigen Vorsprünge im erfindungsgemässen Fussüberzug auf der Unterseite des linken Fusses; und
Figur 5 eine Ansicht der Anordnung der noppenartigen Vorsprünge im erfindungsgemässen Fussüberzug auf der der Oberseite des Fusses.

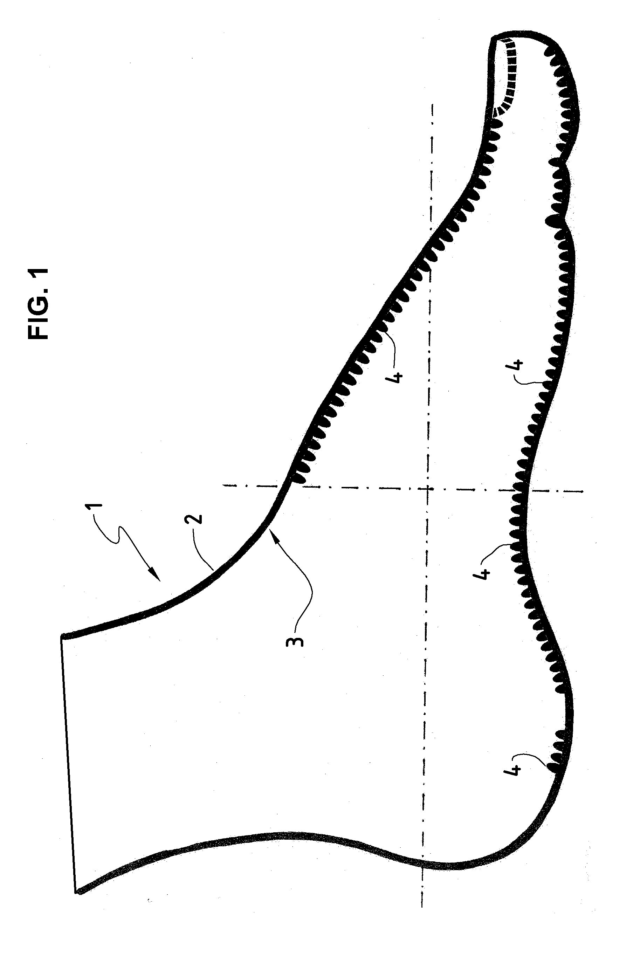

Aus Figur 1 ist der erfindungsgemässe Überzug 1 für eine Extremität eines menschlichen Körpers ersichtlich, im hier dargestellten Ausführungsbeispiel ein Fussüberzug, der eine Hülle 2 umfasst, die aus einem gummiartigen elastischen Material gebildet ist, vorzugsweise aus Latex oder Silikon. Auf der inneren Oberfläche 3 dieser Hülle 2 sind noppenartige Vorsprünge 4 angebracht. Diese noppenartigen Vorsprünge 4 stehen über die innere Oberfläche 3 der Hülle 2 vor, ihre Höhe beträgt etwa 2 mm bis 6 mm, der Durchmesser jedes noppenartigen Vorsprungs 4 beträgt ebenfalls etwa 2 mm bis 6 mm.

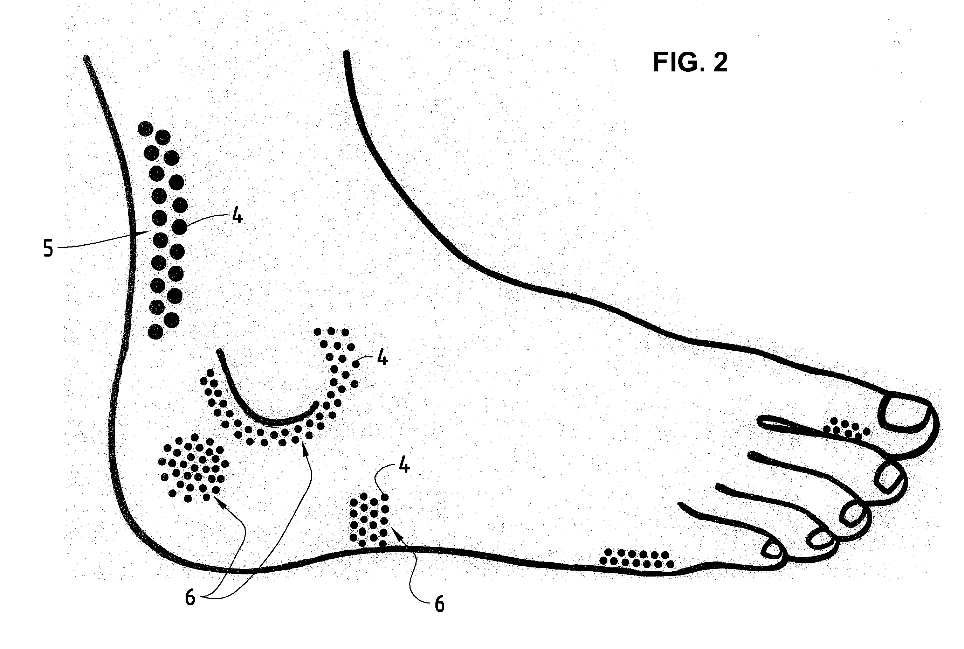

Aus den nachfolgenden Figuren 2 bis 5 ist ersichtlich, wie diese noppenartigen Vorsprünge 4 auf der inneren Oberfläche 3 der Hülle 2 des Überzugs 1 angeordnet sind, angepasst an die Reflexzonen des Fusses, die, wie bereits erwähnt, bekannt sind.

Figur 2 zeigt die Anordnung der noppenartigen Vorsprünge 4 auf der Aussenseite des rechten Fusses. Je nachdem, wie tief die Reflexzonen im Gewebe des Körperteils eingebettet sind oder die Wichtigkeit der primären Erfolgszonen, werden grössere noppenartige Vorsprünge 4, wie dies im Bereich 5 am hinteren Teil des Fusses oberhalb des Knöchels vorgesehen ist, oder kleinere noppenartige Vorsprünge 4, wie diese in anderen Bereichen 6 bei den entsprechenden Reflexzonen vorgesehen ist, eingesetzt.

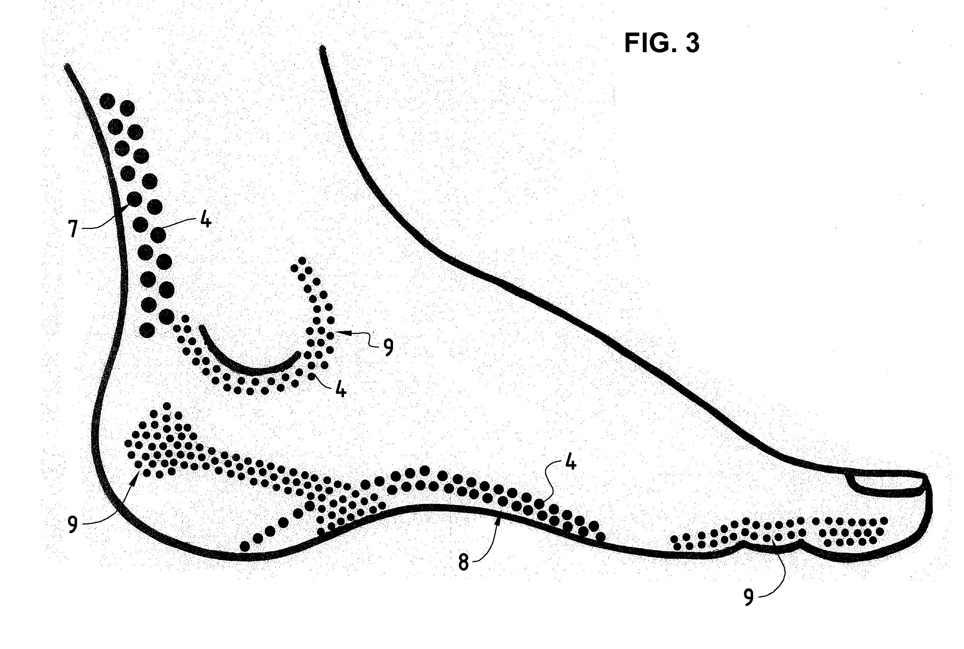

Figur 3 zeigt die Anordnung der noppenartigen Vorsprünge 4 auf der inneren Oberfläche 3 der Hülle 2 des Fussüberzugs 1 auf der Innenseite des linken Fusses. Auch hier gibt es unterschiedliche Grössen von noppenartigen Vorsprüngen 4, im Bereich 7 sind diese gross, im Bereich 8 weisen diese eine mittlere Grösse auf, während in den Bereichen 9 die noppenartigen Vorsprünge 4 eine kleine Grösse aufweisen.

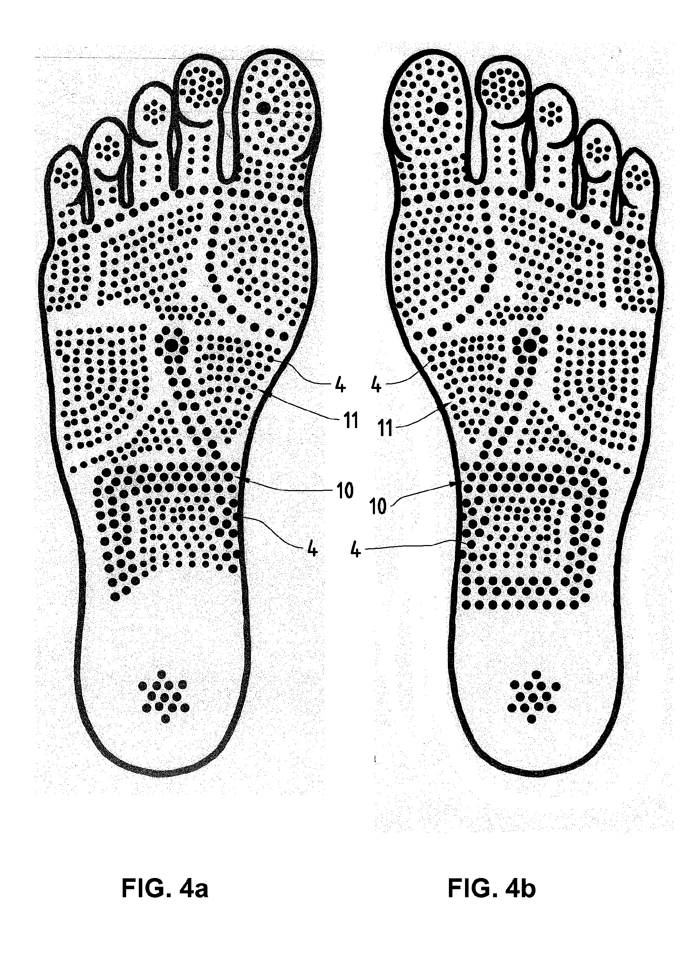

Die Figuren 4a und 4b zeigen jeweils die Anordnung der noppenartigen Vorsprünge 4 an der innere Oberfläche 3 der Hülle 2 des Fussüberzug 1 an der Unterseite des rechten (Figur 4a) und des linken Fusses (Figur 4b). Auch hier sind die noppenartigen Vorsprünge 4 angepasst an die Reflexzonen, wobei auch hier die noppenartigen Vorsprünge 4 je nach Reflexzone unterschiedliche Grössen aufweisen können. So weist beispielsweise die Bereiche 10 noppenartige Vorsprünge 4 auf, die eine mittlere Grösse aufweisen, weitere Bereiche 11 weisen noppenartige Vorsprünge 4 auf, die eine kleine Grösse aufweisen.

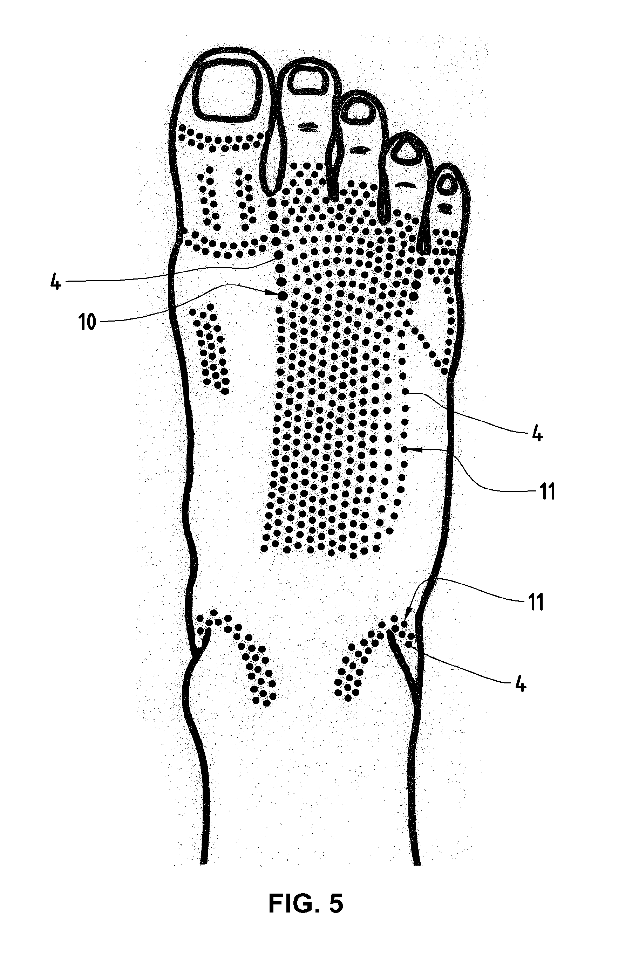

Figur 5 zeigt die Anordnung der noppenartigen Vorsprünge 4 an der inneren Oberfläche 3 der Hülle 2 des Fussüberzugs 1 an der Oberseite des rechten Fusses. Auch hier sind die noppenartigen Vorsprünge 4 an die Fussreflexzonen angepasst und weisen die gewünschte Grösse auf (Bereiche 10 und 11).

Bei einem Fussüberzug mit einer Grösse, die etwa der Schuhgrösse 43 entspricht, weisen die noppenartigen Vorsprünge eine Grösse von 3 mm bis 5 mm auf. Bei Fussüberzügen für kleinere Füsse sind die noppenartigen Vorsprünge proportional zur Fussgrösse kleiner, bei grösseren Fussüberzügen ist die Grösse der noppenartigen Vorsprünge proportional entsprechend grösser. Die Anzahl und die Anordnung der noppenartigen Vorsprünge bleibt für alle Grössen von Fussüberzügen gleich.

Zum Herstellen von derartigen Überzügen kann in bekannter Weise eine Form angefertigt werden, die ein Abbild des Körperteils ist, welcher durch den Überzug überdeckt werden soll. In diese Form können die noppenartigen Vorsprünge als Vertiefungen eingearbeitet werden. Auf diese Form kann das im Wesentlichen in flüssigem Zustand vorliegende gummiartige Material aufgetragen werden. Wie bereits erwähnt, kann dieses gummiartige Material in vorteilhafter Weise Latex oder Silikon sein, wobei auch andere geeignete Matrialien denkbar sind. Das Auftragen dieses Materials auf die Form kann in bekannter Weise durch einen Auftragsvorgang erfolgen, beispielsweise Aufsprühen beziehungsweise Aufspritzen, das Auftragen des gummiartigen Materials auf die Form kann aber auch dadurch erreicht werden, indem diese Form in ein Bad mit dem in flüssigem Zustand vorliegenden gummiartigen Material eingetaucht wird. Hierbei wäre auch ein mehrmaliges Eintauchen möglich, um die gewünschte Dicke der Hülle des Überzugs zu erreichen. Nach dem Trocknen des gummiartigen Materials kann der so gebildete Überzug von der Form abgezogen werden.

Der Überzug kann auch durch einen bekannten dreidimensionalen Druckvorgang mit einem gummiartigen Material gebildet werden. Hierbei kann beispielsweise Latex oder Silikon mit der geeigneten Viskosität als "Druckmaterial" verwendet werden.

Dieser Überzug kann dann auf den entsprechenden Körperteil aufgezogen werden, beispielsweise ein Fussüberzug auf den Fuss, hierbei können in bekannter Weise Mittel zur Verringerung der Reibung eingesetzt werden. Der auf den entsprechenden Körperteil aufgezogene Überzug übt ständig einen leichten Druck auf diesen Körperteil auf, wodurch durch die noppenartigen Vorsprünge die entsprechenden Reflexzonen dauernd leicht stimuliert (sedierend) werden. Bei auf Füsse aufgezogenen Fussüberzügen kann durch Gehen die entsprechende Stimulation beziehungsweise Massage der Fussreflexzonen verstärkt werden. Beim Gehen können auch entsprechende Schuhe getragen werden.

Da der Überzug beziehungsweise die Hülle aus einem elastischen gummiartigen Material besteht, das völlig luftundurchlässig ist, wird auf der Hautoberfläche unterhalb des Überzugs eine Schweissschicht gebildet. Diese Schicht ermöglicht, dass die noppenartigen Vorsprünge der Hülle kleine Gleitbewegungen auf der Hautoberfläche ausführen können, wodurch die Massagewirkung beziehungsweise die Stimulation der entsprechenden Reflexzonen noch verstärkt wird.

Mit diesem erfindungsgemässen Überzug kann in optimaler Weise eine Stimulation oder Massage der Reflexzonen, welche durch den Überzug abgedeckt sind, erreicht werden.

## Patentansprüche

1. Überzug für eine Extremität des menschlichen Körpers, insbesondere Fussüberzug (1), umfassend eine Hülle (2), die aus einem dehnbaren Material gebildet ist und den entsprechenden Körperteil, über welchen der Überzug (1) überziehbar ist, anliegend umspannt, bei welcher Hülle (2) an der inneren Oberfläche (3) noppenartige Vorsprünge (4) zur Stimulierung von Reflexzonen angebracht sind, **dadurch gekennzeichnet, dass** die Hülle (2) aus einem gummiartigen elastischen Material gebildet ist, in welchem die noppenartigen Vorsprünge (4) eingeformt sind, dass die noppenartigen Vorsprünge (4) im über den Körperteil gezogenen Zustand die Reflexzonen abdecken und die noppenartigen Vorsprünge (4) in unterschiedlichen Reflexzonen unterschiedliche Grössen aufweisen.

2. Überzug nach Anspruch 1, **dadurch gekennzeichnet, dass** die Hülle (2) an allen Reflexzonen des Körperteils, mit welchen die Hülle (2) in Kontakt kommt, mit noppenartigen Vorsprüngen (4) versehen ist.

3. Überzug nach Anspruch 1, **dadurch gekennzeichnet, dass** die Hülle (2) nur an ausgewählten Reflexzonen des Körperteils, mit welchen die Hülle (2) in Kontakt kommt, mit noppenartigen Vorsprüngen (4) versehen ist.

4. Überzug nach einem der Ansprüche 1 bis 3, **dadurch gekennzeichnet, dass** die Grösse der noppenartigen Vorsprünge (4) für einen Überzug (1) mittlerer Grösse festgelegt ist und dass die Grösse der noppenartigen Vorsprünge (4) etwa proportional an die Grösse von kleineren Überzügen (1) bzw. grösseren Überzügen (1) angepasst ist

5. Überzug nach einem der Ansprüche 1 bis 4, **dadurch gekennzeichnet, dass** die noppenartigen Vorsprünge (4) im Wesentlichen jeweils einen Durchmesser und eine Höhe aufweisen, die etwa 2 mm bis 6 mm betragen.

6. Überzug nach einem der Ansprüche 1 bis 5, **dadurch gekennzeichnet, dass** das gummiartige elastische Material Latex oder Silkon ist.

7. Verfahren zum Herstellen eines Überzugs gemäss einem der Ansprüche 1 bis 6, **dadurch gekennzeichnet, dass** eine dem Körperteil entsprechende Form hergestellt wird, in welcher noppenartige Vertiefungen angebracht werden, dass auf die Form das im Wesentlichen in flüssigem Zustand vorliegende gummiartige Material aufgebracht wird und nach dem Trocknen des gummiartigen Materials der so gebildete Überzug von der Form abgezogen wird.

8. Verfahren nach Anspruch 7, **dadurch gekennzeichnet, dass** das in flüssigem Zustand vorliegende gummiartige Material durch einen Auftragvorgang auf die Form aufgebracht wird.

9. Verfahren nach Anspruch 7, **dadurch gekennzeichnet, dass** das Aufbringen des in flüssigem Zustand vorliegenden gummiartigen Materials auf die Form durch mindestens einmaliges Eintauchen der Form in ein Bad mit dem in flüssigem Zustand vorliegenden gummiartigen Material erreicht wird.

10. Verfahren zum Herstellen eines Überzugs gemäss einem der Ansprüche 1 bis 6, **dadurch gekennzeichnet, dass** dieser durch einen dreidimensionalen Druckvorgang mit einem gummiartigen Material gebildet wird.
